# EUROPEAN PATENT APPLICATION

(11) **EP 1 475 158 A1**
(43) Date of publication of application: **10.11.2004**
(21) Application number: 04006835.5
(22) Date of filing: 22.03.2004
(51) Int. Cl.: B05B 5/053

(54) **Shielded electrode**

(30) Priority: 08.05.2003 US 431961
(71) Applicant: ILLINOIS TOOL WORKS INC., Glenview, Cook County, Illinois 60025 (US)
(72) Inventor: Young, Roy, Earl II, Indianapolis Indiana 46234 (US); Altenburger, Gene, P., Maumee Ohio 43537 (US); Alexander, Kevin, L., Brownsburg Indiana 46112 (US); Howe, Varce, E., Zionsville Indiana 46077 (US)
(74) Representative: Heinze, Ekkehard, Dr.

(57) **Abstract**

A coating material dispensing device includes an output port through which the coating material is dispensed and an electrode projecting from the dispensing device adjacent the output port for transferring electrical charge to the coating material dispensed through the output port. The coating material dispensing device further includes a shield for shielding a portion of the electrode adjacent the electrode's connection to the dispensing device.

## Description

### Field of the Invention

This invention relates to electrostatically aided atomization and coating of articles with charged particles. It is disclosed in the context of certain types of coating material dispensers. However, it is believed to be useful in a wide range of coating dispensing applications.

### Background of the Invention

As used in this application, terms such as "electrically conductive" and "electrically non-insulative" refer to a broad range of conductivities electrically more conductive than materials described as "electrically non-conductive" and "electrically insulative." Terms such as "front," "rear," "top," "bottom," and the like are used for convenience in explanation and understanding of the invention only, and are not intended to be, nor should they be considered as, used in any limiting sense.

Automatic and handheld coating material dispensing devices of various types are well known. There are, for example, the guns illustrated and described in U. S. Patents: 3,169,882; 3,169,883; 4,002,777; and, 4,285,446. There are also the Ransburg model REA 3, REA 4, REA 70, REA 90, REM and M-90 guns, all available from ITW Ransburg, 320 Phillips Avenue, Toledo, Ohio, 43612-1493. No representation is intended by this listing that a thorough search of all material prior art has been conducted, or that no better art than that listed is available, or that the listed items are material to patentability. Nor should any such representation be inferred.

Standards for testing electrostatically aided coating material atomization and dispensing equipment have been promulgated by a number of testing agencies in various countries. Illustrative of such standards is the Electrostatic Finishing Equipment Approval Standard, Class Number 7260, promulgated by Factory Mutual Research Corporation (the FM standard).

The FM standard includes protocols for the testing of both manual equipment (for example, hand held coating atomizing and dispensing guns--the FM standard, chapter 5) and automatic equipment (for example, atomizers mounted on robot arms--the FM standard, chapter 6). Among the tests in both cases is a test in which the equipment at operating voltage is probed using a grounded metal sphere having a diameter of one inch (about 2.5 cm). This test takes place in an explosive atmosphere of propane in air. An explosion is a failed test. To achieve FM approval, the equipment must, *inter alia,* pass this test. The FM standard has caused considerable research and improvement in the safety of electrostatic coating systems.

### Disclosure of the Invention

According to an aspect of the invention, a coating material dispensing device includes an output port through which the coating material is dispensed and an electrode projecting from the dispensing device adjacent the output port for transferring electrical charge to the coating material dispensed through the output port The coating material dispensing device further includes a shield for shielding a portion of the electrode adjacent the electrode's connection to the dispensing device.

Illustratively according to this aspect of the invention, the output port includes an axis. The electrode is offset from the axis.

Further illustratively according to this aspect of the invention, the electrode comprises a needle-like electrode of metal or other non-insulative material.

Additionally illustratively according to this aspect of the invention, the shield comprises a sleeve of a dielectric material. The sleeve is coupled to the dispensing device at a first end. The electrode projects from a second end of the sleeve remote from the first end.

According to another aspect of the invention, a method for dispensing coating material includes providing a dispensing device, providing on the dispensing device an output port, and dispensing coating material through the output port. An electrode is provided adjacent the output port for transferring electrical charge to the coating material dispensed through the output port. A portion of the electrode adjacent the dispensing device is shielded.

Illustratively according to this aspect of the invention, providing an output port includes providing an output port having an axis. Providing an electrode includes providing an electrode offset from the axis.

Further illustratively according to this aspect of the invention, providing an electrode comprises providing a needle-like electrode of metal or other non-insulative material.

Additionally illustratively according to this aspect of the invention, shielding a portion of the electrode comprises providing a sleeve of a dielectric material, coupling the sleeve to the dispensing device at a first end, and permitting the electrode to project from a second end of the sleeve remote from the first end.

According to another aspect of the invention, a coating material dispensing system includes a device having an output port through which the coating material is dispensed and an electrode projecting from the dispensing device adjacent the output port. An electrical supply is coupled to the electrode. The electrode transfers the electrical charge to the coating material dispensed through the output port. A shield is provided for shielding a portion of the electrode adjacent its connection to the dispensing device.

Illustratively according to this aspect of the invention, the output port includes an axis. The electrode is offset from the axis.

Further illustratively according to this aspect of the invention, the electrode comprises a needle-like electrode of metal or other non-insulative material.

Additionally illustratively according to this aspect of the invention, the shield comprises a sleeve of a dielectric material. The sleeve is coupled to the dispensing device at a first end. The electrode projects from a second end of the sleeve remote from the first end.

Illustratively according to this aspect of the invention, the electrical supply comprises a relatively higher-magnitude DC electrical potential supply.

Alternatively illustratively according to this aspect of the invention, the electrical supply comprises a relatively lower DC electrical potential supply.

Further alternatively illustratively according to this aspect of the invention, the electrical supply comprises a relatively lower AC electrical potential supply.

According to another aspect of the invention, a method for dispensing coating material includes providing a device having an output port through which the coating material is dispensed, providing an electrical supply, providing an electrode adjacent the output port, coupling the electrode to the electrical supply, transferring electrical charge to the coating material dispensed through the output port, and shielding a portion of the electrode adjacent its connection to the dispensing device.

Illustratively according to this aspect of the invention, providing an output port includes providing an output port having an axis. Providing an electrode includes providing an electrode which is offset from the axis.

Further illustratively according to this aspect of the invention, providing an electrode includes providing a needle-like electrode of metal or other non-insulative material.

Additionally illustratively according to this aspect of the invention, shielding a portion of the electrode comprises providing a sleeve of a dielectric material. The method further includes coupling the sleeve to the dispensing device at a first end and permitting the electrode to project from a second end of the sleeve remote from the first end.

Illustratively according to this aspect of the invention, providing an electrical supply comprises providing a relatively high-magnitude DC electrical potential supply.

Alternatively illustratively according to this aspect of the invention, providing an electrical supply comprises providing a relatively low DC electrical potential supply.

Further alternatively illustratively according to this aspect of the invention, providing an electrical supply comprises providing a relatively low AC electrical potential supply.

According to another aspect of the invention, a method is provided for preparing a coating material dispensing device for a test in which a conductive object is made to approach the electrode to promote electrical discharge between the electrode and the conductive object. The coating material dispensing device has an output port through which coating material is to be dispensed from the coating material dispensing device. Adjacent the output port, an electrode projects from the coating material dispensing device. The method includes placing a shield of a dielectric material around the electrode and establishing a potential difference between the electrode and the conductive object.

Illustratively according to this aspect of the invention, the electrode comprises a needle-like electrode. Placing a shield of a dielectric material around the electrode includes placing a sleeve of dielectric material around the electrode and attaching an end of the sleeve to the dispensing device.

Further illustratively according to this aspect of the invention, placing a sleeve of a dielectric material around the electrode and attaching an end of the sleeve to the dispensing device together include leaving an unshielded region remote from the attachment of the electrode to the dispensing device.

### Brief Description of the Drawings

The invention may best be understood by referring to the following description and accompanying drawings which illustrate the invention. In the drawings:
Fig. 1 illustrates a side elevational view of an atomizer of a type which is capable of incorporating the invention, with other components of a system incorporating the atomizer illustrated diagrammatically;

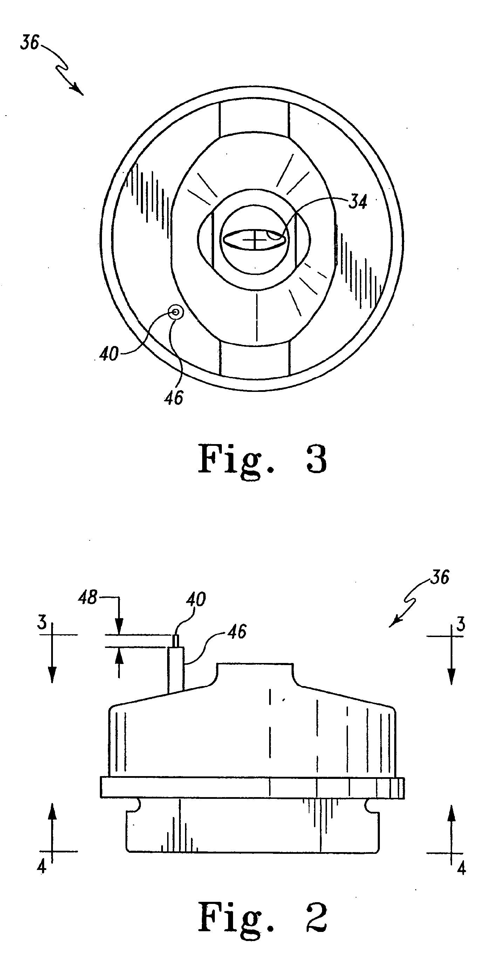

Fig. 2 illustrates an enlarged view of a detail of the system illustrated in Fig. 1;
Fig. 3 illustrates a front elevational view, taken generally along section lines 3-3 of Fig. 2, of the detail illustrated in Figs. 1-2;

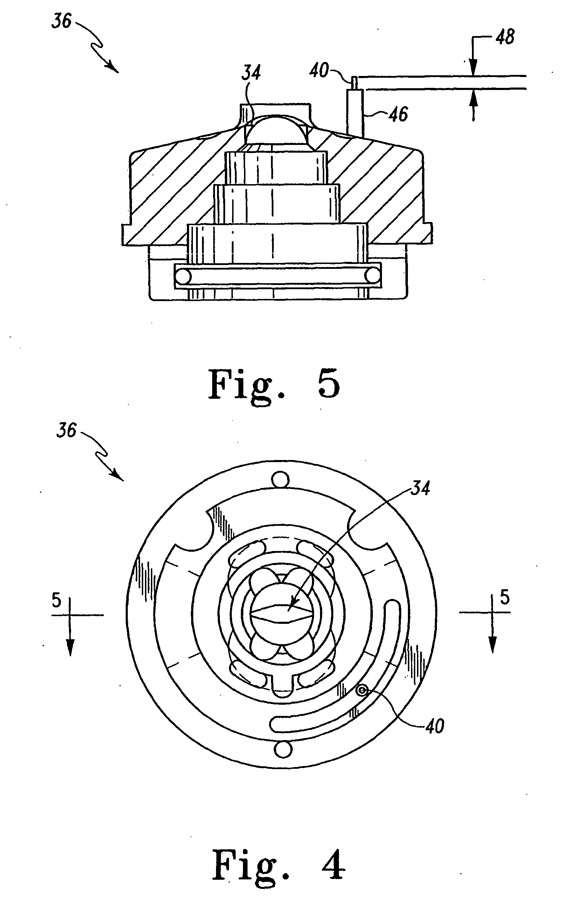

Fig. 4 illustrates a rear elevational view, taken generally along section lines 4-4 of Fig. 2, of the detail illustrated in Figs. 1-3; and,
Fig. 5 illustrates a sectional view, taken generally along section lines 5-5 of Fig. 4, of the detail illustrated in Figs. 1-4.

### Detailed Descriptions of Illustrative Embodiments

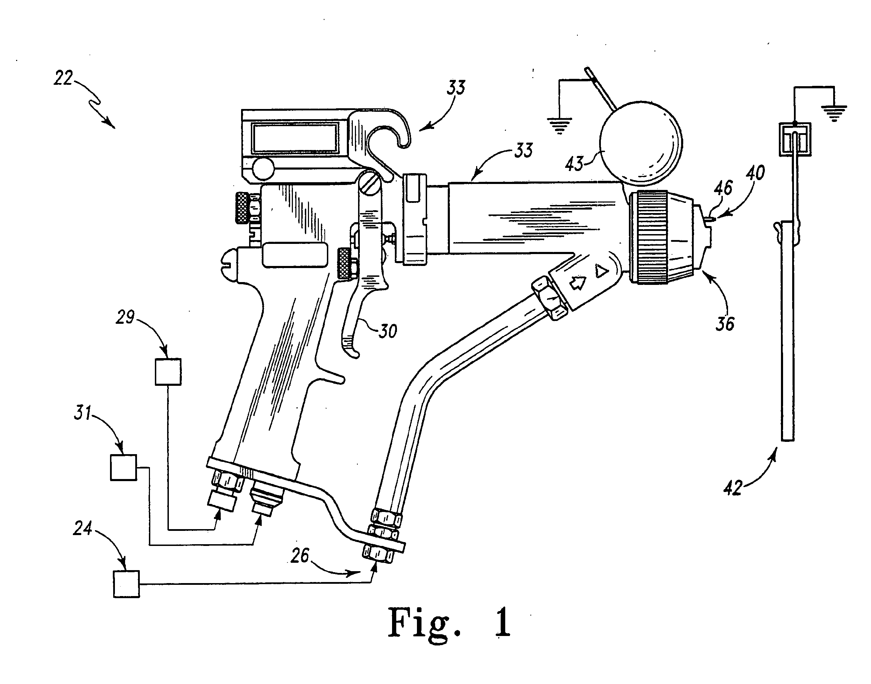

Referring to Fig. 1, in a typical implementation, a coating material dispensing device (hereinafter sometimes "gun") 22 illustratively is of the general type of the Ransburg model REA 3, REA 4, REA 70, REA 90, REM and M-90 guns, available from ITW Ransburg, 320 Phillips Avenue, Toledo, Ohio, 43612-1493. The coating material to be atomized and dispensed is supplied from a source 24 to an input port 26 of the gun 22, and is supplied through a passageway (not shown) in the gun 22 to a trigger 30-operated valve (not shown) at the front of the gun 22.

Other services which the gun 22 may require to operate include, for example, relatively higher-magnitude (for example, -85 KV) DC electrical potential, relatively lower (for example, + or - 12V or + or - 24V) AC or DC electrical potential, relatively higher pressure (for example, 100 p. s. i.) compressed air and relatively lower pressure (for example, 20 p. s. i.) compressed air from one or more sources. Two such sources 29 and 31 are illustrated. Source 29 illustratively is a source of compressed air at a desired pressure. Source 31 illustratively is a source of relatively lower AC electrical potential which is supplied to, for example, a step-up transformer and Cockcroft-Walton multiplier power supply 33 with which gun 22 is equipped. Relatively lower potential DC electrical potential may be supplied to gun 22, but an inverter must be incorporated into power supply 33 to convert the low DC voltage to AC for step-up transformation and multiplication. Examples of power supplies 33 include the systems embodied in the REA-90 and REA-90L guns available from ITW Ransburg, 320 Phillips Avenue, Toledo, Ohio, 43612-1493. Other types of power supplies may also be used. There are, for example, in-gun power supplies which include compressed-gas driven turbines which drive generators or alternators, the outputs of which are supplied directly to a step-up transformer and Cockcroft-Walton multiplier, in the case of an in-gun alternator, or through an inverter to a step-up transformer and Cockcroft-Walton multiplier, in the case of an in-gun DC generator. The coating material is dispensed under the control of the trigger 30 through a nozzle 34 of the gun 22, where the liquid is atomized and dispensed.

The output of the power supply 33 is coupled through circuitry within gun 22 to a needle-like charging electrode (sometimes hereinafter "needle electrode") 40 mounted on an air cap 36 at the front of gun 22. Air cap 36 houses nozzle 34. An electrical field is thereby established between needle electrode 40 and nearby grounded objects, such as, for example, a grounded article 42 to be coated by coating material dispensed from gun 22. The atomized particles of coating material are electrically charged by electrons flowing from the needle electrode 40 and migrate down the electrical field to the article 42 and deposit on article 42, all in accordance with established principles.

During testing according to the FM standard, the area around the nozzle 34 is probed with a grounded one inch (about 2.5 cm) diameter sphere 43 while high-magnitude electrostatic potential is being supplied to needle electrode 40. Corona discharge will be apparent between the sphere 43 and the needle electrode 40 as the sphere 43 is moved, for example, from the rear of the gun 22 forward toward the air cap 36 and into the vicinity of the needle electrode 40. In a prior art assembly constructed as illustrated but not incorporating the invention to be described, in the region of the base of the needle electrode 40, that is, where the needle electrode 40 projects forward from the front surface of the air cap 36, a relatively high energy corona discharge will be apparent. The terminals of this discharge will be a small area of the surface of the sphere 43 and the base of the needle electrode 40. The relatively high energy discharge in such prior art assemblies is often enough to ignite the propane in air mixture mandated by the FM standard. This, of course, constitutes a failure under the FM standard.

According to the invention, however, a sleeve 46 of a dielectric material is provided around the needle electrode 40, shielding the needle electrode somewhat against high energy electrical discharge from the base of the needle electrode 40 toward a grounded metal sphere 43 which is made to approach the front of gun 22 from any arbitrary angle during such a test. The discharge which is established from such a shielded needle electrode 40 appears to originate from an unshielded region 48 of the needle electrode 40 at and adjacent the tip of the electrode 40. A gun 22 with such a needle electrode 40 shielded by such a sleeve 46 experiences fewer high energy discharges, resulting in improved results from tests such as the test mandated by the FM standard.

In an illustrated embodiment, needle electrode 40 is a .016 inch (about .4 mm) diameter titanium needle electrode which projects a distance of about .25 inch (about 6.4 mm) forward from the front of air cap 36. The air cap itself is constructed from black type 150 E Delrin brand acetal resin. The sleeve 46 is a length of any suitably dielectric material, such as polyetheretherketone (PEEK) resin, acetal resin, for example, Delrin brand acetal resin, polytetrafluoroethylene (PTFE), for example, Teflon brand PTFE, polyamide, for example, nylon, or the like. Sleeve 46 has an inside diameter of about .020 inch (about .5 mm) and an outside diameter of about .0625 inch (about 1.6 mm). The sleeve 46 is cut to a length permitting exposure 48 of about .05 inch (about 1.27 mm) of the length of needle electrode 40. Coating the same portion (or all) of the length of the needle electrode 40 with a material (for example, a conformal coating) of any suitable thickness, for example, .001 inch (about .03 mm) may also yield acceptable results. If all of the needle electrode 40 is coated, trimming the end of the coated needle electrode exposes the tip of the needle electrode to serve as a point from which charging can occur.

Sleeve 46 may be glued to air cap 36 around the base of electrode 40 using an adhesive appropriate for the material from which the sleeve 46 is formed. For example, if sleeve 46 is formed from PEEK resin, a cyanoacrylate adhesive such as Zip Grip 4495 adhesive available from ITW Devcon, 30 Endicott Street, Danvers, MA 01923 may be applied on the outside of sleeve 46. Instead of, or in addition to, adhesively bonding the sleeve 46 to the air cap 36, the sleeve 46 may be press-fitted onto the needle electrode 40 and/or into a recess (not shown) surrounding the base of the needle electrode 40 on the air cap 36.

While the illustrated needle electrode 40 is mounted offset from the air cap 36 axis, it should be understood that the invention may also be used on a needle electrode that projects from generally the center of the air cap 36, that is, from the axis of the gun 22 barrel.

It is believed that the success of systems constructed according to the present invention when tested according to the FM standard is attributable at least in part to the tendency of high voltage discharges to travel along (an) available surface(s). The dielectric shield provided by sleeve 46 means that the discharge must travel a greater distance, from the exposed tip 48 of the needle electrode 40 to any nearby ground, such as the sphere 43, or the discharge must overcome the dielectric strength of the sleeve 46 to travel the same distance as it would travel without the sleeve 46 present.

## Claims

1. A coating material dispensing device including an output port through which the coating material is dispensed, an electrode projecting from the dispensing device adjacent the output port for transferring electrical charge to the coating material dispensed through the output port, and a shield for shielding a portion of the electrode adjacent its connection to the dispensing device.

2. The apparatus of claim 1, wherein the output port includes an axis, the electrode being offset from the axis.

3. The apparatus of claim 2, wherein the shield comprises a sleeve of a dielectric material, the sleeve being coupled to the dispensing device at a first end and the electrode projecting from a second end of the sleeve remote from the first end.

4. The apparatus of claim 1, wherein the electrode comprises a needle-like electrode.

5. The apparatus of claim 4, wherein the shield comprises a sleeve of a dielectric material, the sleeve being coupled to the dispensing device at a first end and the electrode projecting from a second end of the sleeve remote from the first end.

6. A method for dispensing coating material including providing a dispensing device, providing on the dispensing device an output port, dispensing coating material through the output port, providing adjacent the output port an electrode for transferring electrical charge to the coating material dispensed through the output port, and shielding a portion of the electrode adjacent the dispensing device.

7. The method of claim 6, wherein providing an output port includes providing an output port having an axis and providing an electrode includes providing an electrode offset from the axis.

8. The method of claim 6 or 7, wherein providing an electrode comprises providing a needle-like electrode.

9. The method of claim 8, wherein shielding a portion of the electrode comprises providing a sleeve of a dielectric material, and coupling the sleeve to the dispensing device at a first end and permitting the electrode to project from a second end of the sleeve remote from the first end.
